# EUROPÄISCHE PATENTSCHRIFT

(11) **EP 2 368 441 B1**
(45) Veröffentlichungstag und Bekanntmachung des Hinweises auf die Patenterteilung: **20.03.2019**
(21) Anmeldenummer: 10157301.2
(22) Anmeldetag: 23.03.2010
(51) Int. Cl.: A23L 5/30, C12H 1/16

(54) **Verfahren und Vorrichtung zur beschleunigten Reifung und Alterung von alkoholischen Getränken**
Method and device for accelerated fermentation and aging of alcoholic drinks
Procédé et dispositif de maturation et de vieillissement accélérés de boissons alcoolisées

(43) Veröffentlichungstag der Anmeldung: 28.09.2011
(73) Patentinhaber: Kreutzinger, Johann, 9038 Rehetobel (CH)
(72) Erfinder: Kreutzinger, Johann, 9038 Rehetobel (CH)
(74) Vertreter: Kaminski Harmann

(56) Entgegenhaltungen:
- DE-C- 638 936
- GB-A- 1 293 981
- US-A- 3 037 116
- US-A1- 2003 031 885
- PATRICIA BENÍTEZ ET AL: "Changes in the polyphenolic and volatile content of Fino Sherry wine exposed to high temperature and ultraviolet and visible radiation" EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE LNKD- DOI:10.1007/S00217-005-0126-7, Bd. 222, Nr. 3-4, 1. Februar 2006 (2006-02-01), Seiten 302-309, XP019328273 ISSN: 1438-2385

## Beschreibung

Die Erfindung betrifft ein Verfahren zur beschleunigten Reifung und Alterung von alkoholischen Getränken, insbesondere Destillaten und Rotweinen, nach Anspruch 1 sowie eine entsprechende Vorrichtung nach Anspruch 13.

In Weinen und Destillaten finden bei der natürlichen Reifung und Alterung im Wesentlichen bekannte und genau untersuchte Veresterungs- und Oxidationsprozesse statt, die bei Destillaten zu einer Reduktion der Schärfe und einer Verbesserung von Aroma und Geschmack, sowie bei Rotweinen zu einer Abrundung und Verfeinerung von Aroma, Charakter und Geschmack führen.

Die Lagerung von alkoholischen Getränken zur Bewirkung einer natürlichen Alterung ist mit einer zeitlichen Kapitalbindung und entsprechenden Kapitalkosten verbunden und erfordert gewisse Lagerkapazitäten der Hersteller oder Händler. Daher wird bereits langem nach Verfahren zur beschleunigten Reifung und Alterung von alkoholischen Getränken unter Beibehaltung von Aroma, Geschmack und Charakter der alkoholischen Getränke gesucht.

Es sind bereits Verfahren zur beschleunigten Reifung und Alterung von alkoholischen Getränken bekannt, die mit Hilfe von Ultraviolettstrahlung, Ultraschall, Laserlicht, Gammastrahlung, gepulster elektromagnetischer Strahlung, IR-Strahlung oder Edelgasen die Qualität von alkoholischen Getränken verbessern bzw. erhalten sollen.

In der deutschen Patentschrift DE 638 936 wird ein Verfahren zur künstlichen Alterung von Wein, Spirituosen und dergleichen durch Ultraviolettbestrahlung beschrieben. Demgemäss wurde bereits um 1910 durch V. Henri festgestellt, dass man Weine und Spirituosen durch Ultraviolettbestrahlung einer beschleunigten Alterung unterziehen kann. Um diesen Prozess möglichst stark auszunutzen, wurde vorgeschlagen, für die Bestrahlung das konzentrierte Licht einer möglichst starken Ultraviolettlampe zu verwenden und das Bestrahlungsgut in möglichst dünner Schicht unter dieser Lampe vorüberzuführen. Es wurde gefunden, dass die beschriebene Behandlung jedoch nicht zu einer echten Edelreife, sondern vielmehr zu einer Art Notreife führt, die ein wenig haltbares und geschmacklich keineswegs befriedigendes Erzeugnis ergibt. Der Grund hierfür liege gemäss der Offenbarung darin, dass durch, eine jedes einzelne Flüssigkeitsteilchen erfassende Ultraviolettbestrahlung mit hoher Dosis eine Sterilisierung des Bestrahlungsgutes und damit eine endgültige Beendigung des Reifungsprozesses herbeigeführt wird. Für die Erzielung einer gesunden Edelreife sei es jedoch erforderlich, dass die Nachreifung nicht vorzeitig abgebrochen wird, sondern durch vollen Ablauf ihr natürliches Ende findet. Aus diesem Grunde konnte sich das Henrische Verfahren angeblich bis dahin nicht einführen. Gemäss der DE 638 936 haben Versuche gezeigt, dass man eine beschleunigte, trotzdem aber gesunde Edelreife herbeiführen kann, wenn man das Bestrahlungsgut mit verhältnismässig geringer, für eine Sterilisierung bei weitem nicht ausreichender Ultraviolettdosis einer mehrfach wiederholten Bestrahlung unterwirft und hierbei zwischen den einzelnen Bestrahlungen längere Reifungszeiten einschiebt. Die Reifungszeiten sollen hierbei mindestens einige Tage oder Wochen betragen. Eine plötzliche Beendigung der Reifungsprozesse werde somit vermieden und stattdessen nur die Esterifizierung der Fuselöle und die normale Nachreife des Behandlungsgutes schrittweise beschleunigt. Das Bestrahlungsgut durchlaufe demnach seinen normalen Alterungsprozess, der hierbei aber in etwa ebensoviel Wochen zusammengedrängt wird, wie er sonst Jahre zu benötigen pflegt. Jedoch hat sich auch das in der DE 638 936 beschriebene Verfahren nicht durchsetzen können, da die natürliche Reifung und Alterung mittels dieses Verfahrens unter Beibehaltung von Aroma, Geschmack und Charakter nicht beschleunigt werden konnte. Da gemäss der DE 638 936 eine lange Behandlungszeit erforderlich ist und das alkoholische Getränk wiederholt in grossen zeitlichen Abständen grossflächig mit Ultraviolettstrahlung beaufschlagt werden soll, wird das alkoholische Getränk insbesondere durch wiederholte Pumpvorgänge, Luftkontakt oder thermischer Beeinflussung weiteren chemischen Reaktionen unterworfen, die sich negativ auf das Aroma auswirken und insbesondere ungewollte Oxidationsprozesse auslösen. Die bisherige Art der Bestrahlung mittels der zum Einsatz kommenden Ultraviolettlampen erwies sich daher als untauglich und konnte sich nicht durchsetzen.

Zur Erläuterung sei darauf hingewiesen, dass von ultravioletter Strahlung gesprochen wird, wenn die Strahlung eine Wellenlänge von 380nm und darunter aufweist.

Aus US 3 037 116 A ist eine Vorrichtung zum Bestrahlen von Flüssigkeiten bekannt, die insbesondere der Bestrahlung von alkoholhaltigen Getränken zur beschleunigten Reifung und Alterung dient. Die Vorrichtung ist mit mehreren Kammern versehen, durch welche die zu behandelnde alkoholische Flüssigkeit fliesst. Die Kammern sind aus für aktinische Strahlung - insbesondere für UV-Strahlung - strahlungsdurchlässigem Material gebildet und als Strahlungsquellen dienen UV-Lampen, wobei eine Bestrahlung der alkoholischen Flüssigkeiten explizit mit Strahlung im Wellenlängenbereich von 350nm bis 450nm erfolgt.

In der GB 1 293 981 A ist ein Verfahren offenbart, bei dem ein Reifungsprozess eines alkoholhaltigen Getränks beschleunigt werden soll, indem das alkoholhaltige Getränk mindestens einmal mit aktinischem Licht in einer Wellenlänge von 390-480 nm in einer spezifischen Intensität für eine Dauer zwischen 2 Sekunden und 10 Minuten bestrahlt wird, wobei eine solche Bestrahlung ein oder auch mehrmals durchgeführt werden kann. In GB 1 293 981 A wird explizit auf die Nachteile hingewiesen, welche sich bei einer Bestrahlung mit Strahlung ausserhalb dieses Wellenlängenbereichs ergeben: bei Strahlung einer Wellenlänge unter 390nm trete ein ozonartiger Geschmack auf und bei ultravioletter Strahlung sei gar eine Gefährdung des Verbrauchers zu befürchten; bei Strahlung mit einer Wellenlänge über 480nmt trete ein Geschmack auf, der an Stinktier erinnere und das Produkt kommerziell unbrauchbar mache.

Alle bekannten Verfahren zur beschleunigten Reifung und Alterung von alkoholischen Getränken, insbesondere Destillaten und Rotweinen, weisen signifikante Nachteile auf. Die Ergebnisse sind entweder schlecht reproduzierbar, führen zu einer Sterilisierung der alkoholischen Getränke, weisen unerwünschte Nebeneffekte auf oder führen nicht zu einer mit dem natürlichen Alterungs- und Reifungsprozess weitgehend identischen chemischen Umwandlung und der damit einhergehenden Verfeinerung von Aroma, Charakter und Geschmack der alkoholischen Getränke.

Tests haben zudem ergeben, dass die oben erwähnten Verfahren nicht auf alle Arten alkoholischer Getränke anwendbar sind. Beispielsweise ist es nicht möglich, das Eichenaroma bestimmter Whisky-Sorten und von Barrique-Weinen, welches durch die Wechselwirkung alkoholischer Getränke mit den Eichenfässern, in denen sie gelagert sind, oder durch die Zugabe von Eichenspänen, erhalten wird, mit einem der oben beschriebenen Verfahren zu erreichen.

Aufgabe der Erfindung ist es daher, ein Verfahren und eine Vorrichtung zur Verfügung zu stellen, um die Reifung und Alterung von alkoholischen Getränken, insbesondere Destillaten und Rotweinen, zu beschleunigen, wobei das bei natürlicher Reifung und Alterung entstehende Aroma des alkoholischen Getränks innerhalb kürzerer Zeit erreicht werden kann, und wobei sich das Verfahren und die Vorrichtung durch reproduzierbare Ergebnisse, Industrietauglichkeit und festlegbare Prozessparameter auszeichnet.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung beruht auf der neuen und durch Versuchsreichen untermauerten Erkenntnis, dass durch chemisch aktive UV-Strahlung ausschliesslich im Wellenlängenbereich unter 400 nm genau die Veresterungs- und Oxidationsreaktionen hervorgerufen werden, die wesentlich verlangsamt auch bei den natürlichen Reifungs- und Alterungsprozessen ablaufen. Strahlung im Wellenlängenbereich deutlich über 400 nm, also sichtbares Licht und Infrarotstrahlung, hingegen wirkt sich negativ auf das zu behandelnde alkoholische Getränk aus. Die bei den bekannten Verfahren zur beschleunigten Reifung und Alterung von alkoholischen Getränken zum Einsatz kommenden Ultraviolettlampen emittieren neben der Ultraviolettstrahlung im Wellenlängenbereich unter 380 nm auch gattungsgemäss längerwellige Strahlung im Spektrum des sichtbaren Lichts und sogar im Infrarotbereich. Der negative Einfluss dieser längerwelligen Strahlung, vor allem der Infrarotstrahlung, blieb bei bisherigen Verfahren zur beschleunigten Reifung und Alterung von alkoholischen Getränken unberücksichtigt, weshalb bisher nur unbefriedigende Ergebnisse erzielt werden konnten.

Erfindungsgemäss wird das zu behandelnde alkoholische Getränk mit einer kürzerwelligen Strahlung ausschliesslich in einem kürzerwelligen Wellenlängenbereich unter 400 nm - insbesondere unter 380 nm, insbesondere unter 360 nm, insbesondere unter 340 nm - und insbesondere über 200 nm, für eine bestimmten Bestrahlungszeit zur beschleunigten Reifung und Alterung beaufschlagt, wodurch eine Beschleunigung der Reifung und Alterung ohne negative Beeinflussung von Aroma und Geschmack erzielt wird.

Dies wurde in umfangreichen sensorischen Analysen verifiziert. Optimale Ergebnisse wurden bei unbehandelten, maischevergorenen Rotweinen, sowie bei fruchtaromahaltigen Destillaten erzielt.

Bekanntlich reicht das Spektrum von Ultraviolettstrahlung von 380 nm bis 1 nm, wobei zwischen UV-A Strahlung ("Nahes UV") im Wellenlängenbereich zwischen 380 und 315 nm, UV-B Strahlung ("Mittleres UV") im Wellenlängenbereich zwischen 315 und 280 nm, UV-C-FUV ("Fernes UV") im Wellenlängenbereich zwischen 280 und 200, UV-C-VUV ("Vakuum UV") im Wellenlängenbereich zwischen 200 und 100 nm sowie dem so genannten "Extremen UV" im Wellenlängenbereich zwischen 100 und 1 nm nach DIN 5031 unterschieden wird. Die oben beschriebene Wirkung wird vor allem im Wellenlängenbereich der UV-A Strahlung, der UV-B Strahlung und der UV-C-FUV Strahlung erzielt.

Geeignete Strahlenquellen, die ausschliesslich Strahlung in diesem kürzerwelligen Wellenlängenbereich emittieren, sind beispielsweise Ultraviolett-Laser und Ultraviolett-Leuchtdioden. Ein Aspekt der Erfindung sieht daher ein Verfahren und eine entsprechende Vorrichtung vor, wobei das zu behandelnde alkoholische Getränk mittels einer solchen Strahlenquelle, die ausschliesslich in dem kürzerwelligen Wellenlängenbereich emittiert, für eine bestimmte Bestrahlungszeit bestrahlt wird. Nachteile dieser Strahlenquellen sind jedoch die hohen Anschaffungskosten im Falle eines Ultraviolett-Lasers oder die verhältnismässig geringe Strahlenleistung im Falle von Ultraviolett-Leuchtdioden. Diese Nachteile könnten sich jedoch durch Weiterentwicklungen im Bereich der Laser- und Diodentechnik in absehbarer Zeit relativieren.

Im Prinzip wird das zu behandelnde alkoholische Getränk in ein UV-durchlässiges Rohr, insbesondere ein Quarzrohr, das durchlässig für ultraviolette Strahlung - insbesondere in dem kürzerwelligen Wellenlängenbereich - ist, geleitet. Unter einem UV-durchlässigen Rohr ist allgemein eine Leitung oder ein Behältnis zum Leiten oder Lagern von Flüssigkeiten mit einem Eingang und einem Ausgang zu verstehen, wobei der Eingang und der Ausgang auch von einer einzigen Öffnung gebildet werden können. Das UV-durchlässige Rohr kann einen runden, ovalen, eckigen, flachen oder sonstigen Querschnitt haben und langgestreckt oder kurz sein und gerade, gebogen, gewunden, mäanderförmig oder sich in beliebiger anderer Weise erstreckend sein. Insbesondere hat das UV-durchlässige Rohr eine zylindrische Form. Vorzugsweise wird das UV-durchlässige Rohr vollständig mit dem alkoholischen Getränk befüllt, so dass das UV-durchlässige Rohr frei von Luft ist und das alkoholische Getränk bei der Behandlung nicht der Luft oder der Umgebungsatmosphäre ausgesetzt ist.

Von einer seitlich neben dem UV-durchlässigen Rohr angeordneten Strahlenquelle, beispielsweise mittels einer UV-Lampe wie einer Quecksilber-Dampflampe, insbesondere einer Hg-Mitteldruckentladungslampe, wird eine Strahlung in einem kürzerwelligen Wellenlängenbereich, der das ultraviolette Spektrum zumindest teilweise umfasst, und in einem längerwelligen Wellenlängenbereich mit Wellenlängen oberhalb des kürzerwelligen Wellenlängenbereichs emittiert. Unter der zum UV-durchlässigen Rohr seitlichen Anordnung der Strahlenquelle ist zu verstehen, dass die Strahlenquelle derart angeordnet ist, dass eine von der Strahlenquelle emittierte Strahlung, zumindest die kürzerwellige Strahlung, direkt oder über Reflexion indirekt auf das UV-durchlässige Rohr, insbesondere dessen Mantelfläche, wirken und in das Innere des UV-durchlässigen Rohrs strahlen kann.

Die allermeisten UV-Quellen, beispielsweise Quecksilberdampf-Niederdruck-, -Mitteldruck-, -Hochdruck- und - Höchstdrucklampen, insbesondere auch -Röhren und - Entladungslampen, emittieren neben UV-Strahlung im kürzerwelligen Wellenlängenbereich unter 400 nm - insbesondere unter 380 nm, insbesondere unter 360 nm, insbesondere unter 340 nm, meist im Bereich über 200 nm - auch Strahlung in einem längerwelligen Wellenbereich oberhalb des kürzerwelligen Wellenlängenbereichs. All diese sowohl in dem kürzerwelligen Wellenlängenbereich, als auch im längerwelligen Wellenlängenbereich emittierenden Strahlenquellen können erfindungsgemäss als Strahlenquellen verwendet werden.

In diesem Fall wird die Strahlung mittels einer zwischen der Strahlenquelle und dem UV-durchlässiges Rohr angeordneten Abschirmung zumindest in dem längerwelligen Wellenlängenbereich, vorzugsweise vollständig im gesamten Spektrum, an einem direkten Auftreffen auf das UV-durchlässiges Rohr gehindert.

Diese Strahlung wird mittels eines Filters, insbesondere mittels eines dichroitischen Filters, das auch als dichroitischer Spiegel ausgebildet sein kann, in die kürzerwellige Strahlung in dem kürzerwelligen Wellenlängenbereich und in eine längerwellige Strahlung in dem längerwelligen Wellenlängenbereich aufgespalten oder getrennt.

Dichroitische Filter und dichroitische Spiegel, die aufgrund ihres Aufbaus auch als dielektrischer Spiegel bezeichnet werden, sind optische Elemente, die nur einen Teil des Lichtspektrums durchlassen. Beim dichroitischen Spiegel wird der andere Teil reflektiert, so dass er die einfallende Strahlung nach der Wellenlänge und somit nach der Farbe trennt. Dichroitische Spiegel beruhen insbesondere auf der Interferenz der Lichtwellen, die von einer Abfolge mehrerer dünner dielektrischer Schichten auf der Oberfläche reflektiert werden. Dichroitische Spiegel sind somit eine spezielle Form der Interferenzfilter. Bei einem klassischen dichroitischen Filter wird der nicht durchgelassene, andere Teil des Spektrums hingegen absorbiert.

Im Rahmen der Erfindung ist unter dem Begriff des dichroitischen Filters sowohl das klassische absorbierende dichroitische Filter, als auch der reflektierende dichroitische Spiegel zu verstehen. Anstelle dichroitischer Filter und dichroitischer Spiegel können auch andere optische Elemente, welche funktional einem dichroitischen Filter bzw. dichroitischen Spiegel entsprechen, welche also einen bestimmten Wellenlängenbereich durchlassen und einen anderen blockieren oder reflektieren, erfindungsgemäss eingesetzt werden. Diese funktional gleichartigen optischen Elemente fallen erfindungsgemäss unter den Begriff des dichroitischen Filters oder Spiegels. Demgemäss ist auch ein polychroitischer Filter oder Spiegel als dichroitischer Filter oder Spiegel zu verstehen.

Das insbesondere dichroitische Filter ist erfindungsgemäss derart angeordnet und ausgebildet, dass die kürzerwellige Strahlung auf das UV-durchlässige Rohr trifft, wohingegen die längerwellige Strahlung nicht auf das UV-durchlässigen Rohr trifft, also durch Absorption oder Auskopplung aus dem Strahlengang von dem UV-durchlässigen Rohr wegführt ist. Das zu behandelnde alkoholische Getränk wird somit in dem UV-durchlässigen Rohr mit der kürzerwelligen Strahlung für eine bestimmte Bestrahlungszeit zur beschleunigten Reifung und Alterung beaufschlagt.

In einer möglichen Ausführungsform der Erfindung sind die Abschirmung und das insbesondere dichroitische Filter als eine Einheit ausgebildet. In anderen Worten ist die Abschirmung ein klassisches absorbierendes dichroitisches Filter, das die kürzerwellige Strahlung durchlässt, so dass sie auf das UV-durchlässige Rohr trifft, wohingegen die längerwellige Strahlung vom dichroitischen Filter absorbiert wird. Ein Vorteil dieser einfachen Ausführungsform besteht in dem einfachen Aufbau der Vorrichtung. Nachteilig ist jedoch die Absorption der längerwelligen Strahlung im Filter, da sich letzteres hierdurch erwärmen kann. Die dadurch entstehende Wärmestrahlung kann einen ungewollten, negativen thermischen Einfluss auf das zu behandelnde alkoholische Getränk im UV-durchlässigen Rohr haben, der jedoch erfindungsgemäss vermieden werden soll. Abhilfe kann hier eine vom UV-durchlässigen Rohr ausreichend beabstandete Anordnung des absorbierenden dichroitischen Filters vom UV-durchlässigen Rohr und/oder eine Isolierung und/oder Kühlung schaffen.

Um eine derartige nachteilige thermische Beeinflussung des alkoholischen Getränks zu vermeiden, sieht die Erfindung in einer bevorzugten Weiterbildung vor, die längerwellige Strahlung aus dem Strahlengang mittels eines dichroitischen Spiegels auszukoppeln.

Beispielsweise wird die kürzerwellige Strahlung von dem dichroitischen Spiegel derart reflektiert, dass die kürzerwellige Strahlung direkt und/oder mittels weiterer Reflexion indirekt auf das UV-durchlässige Rohr trifft. Die längerwellige Strahlung wird von dem dichroitischen Spiegel hingegen in eine direkt und indirekt an dem UV-durchlässigen Rohr derart vorbeiführende Richtung durchgelassen, dass die längerwellige Strahlung nicht auf das UV-durchlässige Rohr und somit das zu behandelnde alkoholische Getränk trifft und somit das UV-durchlässige Rohr frei von der längerwelligen Strahlung ist. Beispielsweise wird die längerwellige Strahlung auf einen Kühler geführt und dort absorbiert, wobei die im Kühler entstehende Wärme an die Umgebung abgegeben wird. Vorzugsweise trifft die von der Strahlenquelle emittierte Strahlung im Winkel von 45° auf den dichroitischen Spiegel auf und wird somit um 90° reflektiert.

Eine Weiterbildung der Erfindung sieht vor, dass die von der Strahlenquelle emittierte Strahlung von einem ersten Spiegel, insbesondere einem ersten konkaven Spiegel, insbesondere einer ersten Spiegelrinne oder einem ersten Parabolspiegel, insbesondere einer ersten Parabolrinne, auf den dichroitischen Spiegel reflektiert wird. Es ist möglich, dass die auf dem dichroitischen Spiegel auftreffende Strahlung vollständig über den ersten Spiegel gelenkt wird oder dass ein Teil der Strahlung direkt und ein anderer Teil der Strahlung indirekt, nämlich über den ersten Spiegel, von der Strahlenquelle kommen. Der dichroitische Spiegel reflektiert die kürzerwellige Strahlung in Richtung des UV-durchlässigen Rohrs derart, dass ein erster Teil der kürzerwelligen Strahlung direkt auf die zu dem dichroitischen Spiegel hinweisende Seite des UV-durchlässigen Rohrs trifft. Vorzugsweise umgibt ein zweiter, insbesondere konkaver Spiegel, der insbesondere als zweite Spiegelrinne oder als ein zweiter Parabolspiegel, insbesondere als eine zweite Parabolrinne ausgebildet ist, das UV-durchlässige Rohr auf der von dem dichroitischen Spiegel wegweisenden Seite. Ein zweiter Teil der kürzerwelligen Strahlung, nämlich der nicht direkt auf die zu dem dichroitischen Spiegel hinweisende Seite des UV-durchlässigen Rohrs treffende Anteil der kürzerwelligen Strahlung, wird von dem zweiten Spiegel in Richtung des UV-durchlässigen Rohrs derart reflektiert, dass dieser zweite Teil auf die von dem dichroitischen Spiegel wegweisende Seite und die zum zweiten Spiegel weisende Seite des UV-durchlässigen Rohrs trifft. Somit wird erfindungsgemäss erreicht, dass das UV-durchlässige Rohr ringsum mit der kürzerwelligen Strahlung beaufschlagt wird, obwohl nur eine einzige, seitlich neben dem UV-durchlässigen Rohr angeordnete Strahlenquelle zum Einsatz kommen braucht. Somit wird der Wirkungsgrad des Verfahrens und der Vorrichtung optimiert.

Selbstverständlich ist es erfindungsgemäss möglich, auch mehrere Strahlenquelle, die entlang dem UV-durchlässigen Rohr und/oder rings um das UV-durchlässige Rohr angeordnet sind, einzusetzen.

In einer Variante der Erfindung wird das zu behandelnde alkoholische Getränk durch das UV-durchlässige Rohr kontinuierlich, insbesondere mit einer im Wesentlichen konstanten Durchflussgeschwindigkeit, hindurchgeleitet, wobei die Bestrahlungszeit des zu behandelnden alkoholischen Getränks über den Durchfluss einer Pumpe gesteuert, insbesondere geregelt wird. Vorzugsweise wird in dem UV-durchlässigen Rohr eine derartige turbulente Strömung erzeugt, dass das zu behandelnde alkoholische Getränk gleichmässig mit der kürzerwelligen Strahlung beaufschlagt wird. Somit kann der Wirkungsgrad des Verfahrens und der Vorrichtung erheblich erhöht werden.

In einer alternativen Variante wird das zu behandelnde alkoholische Getränk in einem ersten Schritt in das UV-durchlässige Rohr geleitet. In einem zweiten Schritt, in welchem das alkoholische Getränk im UV-durchlässigen Rohr verbleibt, wird das alkoholische Getränk in dem UV-durchlässigen Rohr für eine bestimmte Bestrahlungszeit mit der kürzerwelligen Strahlung beaufschlagt. Es ist möglich, das alkoholische Getränk während der Verweildauer im UV-durchlässigen Rohr mittels einer Mischvorrichtung zu mischen, um eine gleichmässige Behandlung des gesamten alkoholischen Getränks durch die kürzerwellige Strahlung zu gewährleisten. In einem dritten Schritt, nach Ablauf der Bestrahlungszeit, wird das alkoholische Getränk aus dem UV-durchlässigen Rohr geleitet.

Ausserdem umfasst die Erfindung eine Vorrichtung zur Anwendung des beschriebenen Verfahrens, insbesondere mit den bereits im Zusammenhang mit dem Verfahren beschrieben Vorrichtungsmerkmalen.

Eine erfindungsgemässe Vorrichtung zur beschleunigten Reifung und Alterung von alkoholischen Getränken, insbesondere Destillaten und Rotweinen, insbesondere unter Anwendung des beschriebenen Verfahrens, besitzt einen Eingang zum Einleiten des zu behandelnden alkoholischen Getränks, einen Ausgang zum Ausleiten des behandelten alkoholischen Getränks, wobei Eingang und Ausgang als eine Einheit ausgebildet sein können, sowie mindestens ein UV-durchlässiges Rohr, das durchlässig für ultraviolette Strahlung ist, das zwischen dem Eingang und dem Ausgang angeordnet ist und durch welches das alkoholische Getränk leitbar ist. Die Vorrichtung besitzt mindestens eine Pumpe, mittels welcher das alkoholische Getränk vom Eingang zum Ausgang durch das mindestens eine UV-durchlässige Rohr mit einer kontinuierlichen oder diskontinuierlichen Durchfussgeschwindigkeit leitbar ist. Die Pumpe kann jedoch auch extern angeordnet und nicht Bestandteil der Vorrichtung sein.

Ausserdem weist die Vorrichtung mindestens eine Strahlenquelle, wie in Zusammenhang mit dem Verfahren beschrieben, auf. Die Strahlenquelle erstreckt sich seitlich neben dem mindestens einen UV-durchlässigen Rohr. Die Strahlungsquelle kann ausschließlich eine Strahlung in einem kürzerwelligen Wellenlängenbereich unter 400 nm, der das ultraviolette Spektrum zumindest teilweise umfasst, emittieren, oder eine Strahlung in einem kürzerwelligen Wellenlängenbereich, der das ultraviolette Spektrum zumindest teilweise umfasst, und in einem längerwelligen Wellenlängenbereich mit Wellenlängen oberhalb des kürzerwelligen Wellenlängenbereichs emittieren, wobei die Strahlungsquelle insbesondere eine Quecksilberdampflampe ist.

Im letzteren Fall, umfasst die Vorrichtung dann mindestens eine Abschirmung und ein optisches Element. Die ₗaiina Abschirmung ist zwischen der Strahlenquelle und dem UV-durchlässiges Rohr derart angeordnet, dass die Strahlung zumindest in dem längerwelligen Wellenlängenbereich, vorzugsweise im gesamten Spektrum der Strahlenquelle, an einem direkten Auftreffen auf das UV-durchlässiges Rohr gehindert wird.

Das optische Element ist derart ausgebildet, dass die Strahlung in die in Zusammenhang mit dem Verfahren beschriebene kürzerwellige Strahlung in dem kürzerwelligen Wellenlängenbereich und die längerwellige Strahlung in dem längerwelligen Wellenlängenbereich teilbar bzw. aufspaltbar ist. Im Falle eines klassischen, absorbierenden dichroitischen Filters als optisches Element wird die längerwellige Strahlung absorbiert, im Falle eines dichroitischen Spiegels als optisches Element werden die beiden Strahlungen in unterschiedlichen Richtungen geleitet. Der dichroitische Filter ist derart angeordnet und ausgebildet, dass die kürzerwellige Strahlung auf das UV-durchlässige Rohr trifft und die längerwellige Strahlung von dem UV-durchlässigen Rohr wegführt wird, beispielsweise durch Absorption im absorbierenden dichroitischen Filter oder durch Auskopplung aus dem Strahlengang im dichroitischen Spiegel. In einer Weiterbildung der Erfindung ist das dichroitische Filter als ein dichroitischer Spiegel ausgebildet, der derart angeordnet und ausgebildet ist, dass die kürzerwellige Strahlung von dem dichroitischen Spiegel in eine Richtung reflektiert wird, die direkt und/oder über Reflexion indirekt zu dem UV-durchlässiges Rohr führt, so dass die kürzerwellige Strahlung auf das UV-durchlässiges Rohr trifft. Die Anordnung und Ausbildung des dichroitischen Spiegels ist derart, dass die längerwellige Strahlung von dem dichroitischen Spiegel in eine direkt und über Reflexion indirekt an dem UV-durchlässigen Rohr vorbeiführende Richtung durchgelassen wird, so dass diese längerwellige Strahlung nicht auf das UV-durchlässige Rohr und das zu behandelnde alkoholische Getränk trifft und das UV-durchlässige Rohr frei von der längerwelligen Strahlung ist.

Gemäss einer Weiterbildung der erfindungsgemässen Vorrichtung besitzt selbige einen ersten insbesondere konkaven Spiegel, insbesondere eine erste Spiegelrinne oder einen ersten Parabolspiegel, insbesondere eine erste Parabolrinne. Der erste Spiegel ist benachbart zur Strahlenquelle derart angeordnet und ausgebildet, dass die von der Strahlenquelle insbesondere radial ringsum emittierte Strahlung vorzugsweise im Wesentlichen vollständig auf den dichroitischen Spiegel reflektiert wird. Ausserdem umfasst die Vorrichtung einen zweiten insbesondere konkaven Spiegel, insbesondere eine zweite Spiegelrinne oder einen zweiten Parabolspiegel, insbesondere eine zweite Parabolrinne, der das UV-durchlässige Rohr auf der von dem dichroitischen Spiegel wegweisenden Seite umgibt. Der dichroitische Spiegel ist derart angeordnet, dass er die vom ersten Spiegel und von der Strahlenquelle kommende kürzerwellige Strahlung in Richtung des UV-durchlässigen Rohrs reflektiert, wobei ein erster Teil der kürzerwelligen Strahlung direkt auf die zu dem dichroitischen Spiegel hinweisende Seite des UV-durchlässigen Rohrs trifft. Der zweite Spiegel ist derart angeordnet und ausgebildet, dass ein zweiter Teil der kürzerwelligen Strahlung, der nicht auf das UV-durchlässigen Rohr trifft, sondern an ihm vorbei geführt ist, auf den zweiten Spiegel trifft und von diesem in Richtung des UV-durchlässigen Rohrs derart reflektiert wird, dass dieser zweite Teil auf die von dem dichroitischen Spiegel wegweisende Seite des UV-durchlässigen Rohrs gelenkt wird. Somit wird das UV-durchlässige Rohr ringsum von allen Seiten mit der kürzerwelligen Strahlung beaufschlagt, so dass eine homogene Behandlung des zu alkoholischen Getränks erzielt wird.

Gemäss einem weiteren Aspekt der Erfindung sind der erste Spiegel und/oder der zweite Spiegel jeweils als eine in einer Dimension gekrümmte Spiegelrinne, insbesondere als Parabolrinne, ausgebildet. Um eine derartige Spiegelanordnung auf wirtschaftliche Weise umsetzbar zu machen, sieht die Erfindung ausserdem vor, dass der erste Spiegel und/oder der zweite Spiegel von mindestens einer reflektierenden flexiblen Blechtafel gebildet werden, die zwischen zwei den Krümmungsquerschnitt der Spiegel aufweisenden Rahmenelementen eingespannt sind. Die beiden einander gegenüberliegenden Rahmenelemente können beispielsweise jeweils eine Nut aufweisen. Die beiden Nuten verlaufen parallel zueinander, liegen einander gegenüber und erstrecken sich dem Querschnitt der Spiegel entsprechend. Die reflektierenden flexiblen Blechtafeln können in die Nuten hinein geschoben werden und nehmen somit die Form einer gekrümmten Spiegelrinne, insbesondere die Form eines Parabolrinne an.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben.

Im Einzelnen zeigen:
- Figur 1: eine erst Anordnung einer Strahlenquelle, eines Filters und eines UV-durchlässigen Rohrs;
- Figur 2: eine zweite Anordnung einer Strahlenquelle, eines ersten Parabolspiegels, einer Abschirmung, eines dichroitischen Spiegels und eines UV-durchlässigen Rohrs;
- Figur 3: eine dritte Anordnung einer Strahlenquelle, eines ersten Parabolspiegels, einer Abschirmung, eines dichroitischen Spiegels, eines zweiten Parabolspiegels und eines UV-durchlässigen Rohrs;
- Figur 4: eine vierte Anordnung einer Strahlenquelle, eines ersten Parabolspiegels, eines dichroitischen Spiegels, eines zweiten Parabolspiegels und eines UV-durchlässigen Rohrs;
- Figur 5: ein System zur Behandlung des alkoholischen Getränks und
- Figur 6: das Spektrum einer Hg-Mitteldruckentladungslampe.

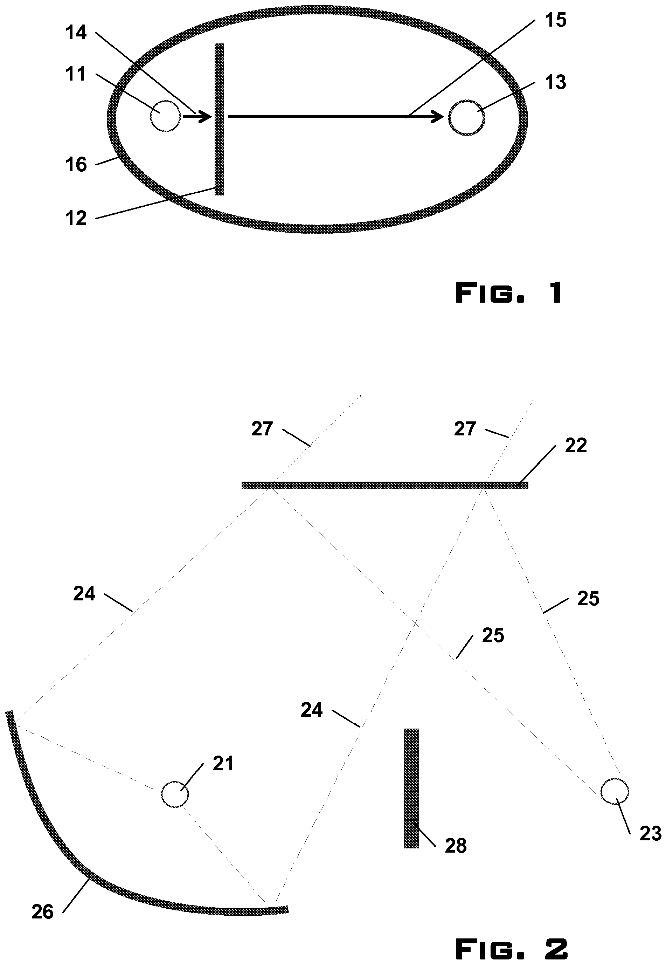

In einer technischen Ausführung gemäss den Figuren 1 bis 4 wird das alkoholische Getränk in einem UV-durchlässigen Rohr 13, 23, 33 oder 43, vorzugsweise einem Quarzrohr, an einer Strahlenquelle 11, 21, 31 oder 41, insbesondere einer UV-Quelle, mit einer definierten Geschwindigkeit vorbeigeführt. Alternativ ist auch ein Batch-Betrieb möglich, bei dem definierte Quantitäten des alkoholischen Getränkes für einen bestimmten Zeitraum im UV-Strahlungsfeld der Strahlenquelle 11, 21, 31 oder 41 verbleiben.

Vorzugsweise wird das insbesondere als Quarzrohr ausgebildete UV-durchlässigen Rohr 13, 23, 33 oder 43 mit einer Einrichtung versehen, die zu hohen Reynoldszahlen und damit zu einer turbulenten Strömung führt. Damit wird erreicht, dass alle Teilchen des alkoholischen Getränkes gleichmässig mit dem Strahlungsfeld der Strahlenquelle 11, 21, 31 oder 41 beaufschlagt werden.

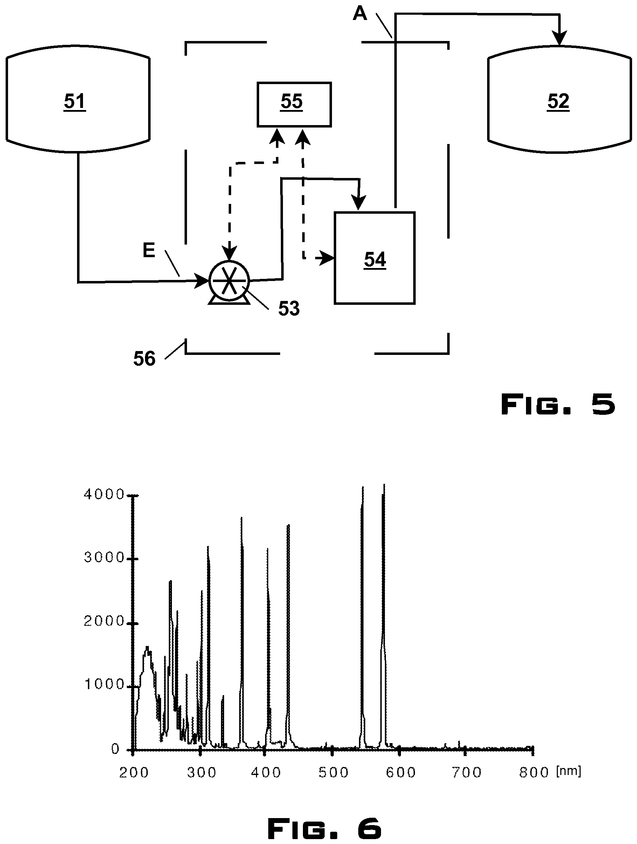

Üblichen UV-Quellen 11, 21, 31 oder 41, beispielsweise Quecksilberdampf-Niederdruck-, -Mitteldruck-, -Hochdruck- und -Höchstdrucklampen, insbesondere auch -Röhren und -Entladungslampen, emittieren neben UV-Strahlung im kürzerwelligen Wellenlängenbereich unter 400 nm - insbesondere unter 380 nm, insbesondere unter 360 nm, insbesondere unter 340 nm, meist im Bereich über 200 nm - auch Strahlung in einem längerwelligen Wellenbereich oberhalb des kürzerwelligen Wellenlängenbereichs, vor allem auch IR-Strahlung. Ein typisches Spektrum einer Hg-Mitteldruckentladungslampe zeigt Figur 6. Darin ist zu erkennen, das auch im Bereich über 400 nm Strahlung mit hoher Intensität emittiert wird, insbesondere im Bereich um 550 bis über 600 nm. Um die Strahlung, deren Wellenlänger grösser ist das die der kürzerwelligen Strahlung, also die längerwellige Strahlung an einem Auftreffen auf das UV-durchlässige Rohr 13, 23, 33 oder 43 zu hindern und somit eine unerwünschte Erwärmung des alkoholischen Getränkes zu vermeiden, wird die von der UV-Quelle 11, 21, 31 oder 41 emittierte, ungefilterte Strahlung 14, 24, 34 oder 44 mittels eines Filters oder Spiegels gefiltert oder geteilt.

Gemäss dem Ausführungsbeispiel aus Figur 1 geschieht dies mittels eines Sperrfilters 12, welcher die längerwelligen Strahlungsanteile in der von der UV-Quelle 11 emittierten Strahlung 14 insbesondere mittels Absorption an einem Durchdringen des Sperrfilters 12 und somit an einem Auftreffen auf das UV-durchlässige Rohr 13 hindert, wohingegen die kürzerwellige Strahlung 15 durchgelassen wird. Bei dieser Variante wird die Strahlung 14 der UV-Quelle 11, die sich im ersten Brennpunkt eines ersten elliptischen Spiegels 16 befindet, in das UV-durchlässige Rohr 13 fokussiert, das sich im zweiten Brennpunkt des elliptischen Spiegels 16 befindet. Das Sperrfilter 12 blockt die längerwellige Strahlung ab, wodurch eine unerwünschte Erwärmung des UV-durchlässigen Rohres 13 und des darin befindlichen alkoholischen Getränkes verhindert wird. Das Sperrfilter ist insbesondere als IR-Sperrfilter oder als dichroitischer Filter aufgebildet. Beispielsweise blockt das Filter ab einer Wellenlänge von 400 oder 500 nm.

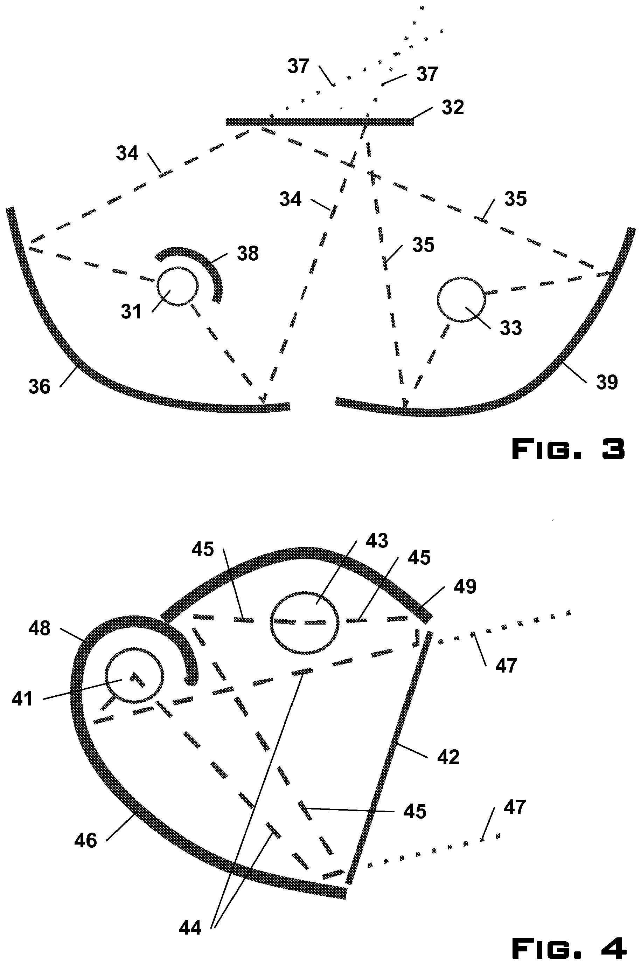

Die Figuren 2 und 3 zeigen Ausführungen, bei denen die längerwellige Strahlung 27 bzw. 37 der von den Strahlenquellen 21 bzw. 31 emittierten, ungefilterten Strahlung 24 bzw. 34 durch selektiv reflektierende Filter 22 bzw. 32, vorzugsweise dichroitische Filter, ausgekoppelt wird. Bei der Ausführung gemäss Figur wird die Strahlung 24 einer UV-Quelle 21 mit Hilfe eines ersten Parabolspiegels 26 in das UV-durchlässige Rohr 23 fokussiert. Die Strahlung wird über ein als dichroitischer Spiegel 22 ausgebildetes dichroitisches Filter geleitet, das die Strahlung in die längerwellige Strahlung 27, die ausgekoppelt wird, und in die kürzerwellige Strahlung 25, die in das UV-durchlässige Rohr 23 fokussiert wird, aufspaltet. Eine Abschirmung 28 blockt den direkten Weg der Strahlung 24 von der UV-Quelle 21 zu dem UV-durchlässigen Rohr 23 ab.

Die Ausführung gemäss Figur 3 enthält zusätzlich zu der Ausführung gemäss Figur 2 einen auch als Abschirmung wirkenden Hilfsspiegel 38 zur Verminderung der Strahlungsverluste sowie zur Vermeidung eines Auftreffens der ungefilterten Strahlung 34 auf dem UV-durchlässigen Rohr 33, sowie einen zweiten Parabolspiegel 39 zur Verbesserung des Wirkungsgrades. In dessen Fokus befindet sich das UV-durchlässige Rohr 33. Wie auch im Ausführungsbeispiel gemäss Figur 2 wird die von der UV-Lampe 31 emittierte Strahlung 34 von dem ersten Parabolspiegel 36 auf den dichroitischen Spiegel 32 gelenkt, mittels welchem die längerwellige Strahlung 37 ausgekoppelt und die kürzerwellige Strahlung 35 auf den zweiten Parabolspiegel 39 sowie direkt auf die zum dichroitischen Spiegel 32 weisende Seite des UV-durchlässige Rohr 33 reflektiert wird. Der zweite Parabolspiegel 39 fokussiert die kürzerwellige Strahlung 35 auf die von dem dichroitischen Spiegel 32 wegweisende Rückseite des UV-durchlässigen Rohrs 33.

Bei der Ausführung gemäss Figur 4 wird die isotrope Strahlung 44 der UV-Quelle 41 mit Hilfe eines auch als Abschirmung wirkenden Hilfsspiegels 48 und dem asymmetrisch angebrachten ersten Parabolspiegel 46 in ein paralleles Strahlenbündel 44 umgewandelt, welches mit dem optimalen Winkel von 45° auf den dichroitischen Spiegel 42 trifft. Dort wird das Strahlenbündel der Strahlung 44 auf bekannte Weise in die längerwellige Strahlung 47 und die kürzerwellige Strahlung 45 aufgespaltet. Die kürzerwellige Strahlung 45 wird mit Hilfe des zweiten Parabolspiegels 49 in das UV-durchlässige Rohr 43 fokussiert.

Figur 5 zeigt ein erfindungsgemässes Gesamtsystem 56, wie es typischerweise in einen Herstellungsbetrieb für alkoholische Getränke integriert ist. Das alkoholische Getränk wird aus einem vollen ersten Tank 51 durch das Gesamtsystem 56 in einen leeren zweiten Tank 52 mittels einer Pumpe 56 gepumpt und dabei physikalisch behandelt. Das Gesamtsystem 56 selbst beinhaltet die insbesondere als Dosierpumpe ausgebildete Pumpe 53, eine physikalische Behandlungseinheit 54, welche wiederum eine erfindungsgemässe Vorrichtung, insbesondere eine der Vorrichtungen gemäss den Ausführungsbeispielen der Figuren 1 bis 4, enthält, sowie eine programmierbaren Steuerung 55. Das zu behandelnde alkoholische Getränk aus dem ersten Tank 51 wird über einen Eingang E dem Gesamtsystem 56 und mittels der Pumpe 53 der physikalischen Behandlungseinheit 54 zugeführt, in welcher es durch mindestens ein UV-durchlässiges Rohr 13, 23, 33 oder 43 beispielsweise entsprechend den Figuren 1 bis 4 zur Behandlung geleitet wird. Das behandelte alkoholische Getränk verlässt das Gesamtsystem 56 über den Ausgang A und wird in den zweiten Tank 52 geführt.

Die für einen Betrieb notwendigen Sensoren für Feuchtigkeit, Ausfall der UV-Strahlung, Durchfluss, Temperatur etc., welche von der Steuerung 55 ausgewertet werden, sind der Übersichtlichkeit halber nicht eingezeichnet.

Da mit der vorliegenden Erfindung die an sich erwünschte Reifung und Alterung des alkoholischen Getränkes, aber auch die anschliessende unerwünschte Oxidationsphase mit der mit dieser einhergehenden Geschmacksverschlechterung beschleunigt wird, muss für jedes alkoholische Getränk der optimale Reifegrad ermittelt werden. Die Erfindung enthält in ihrer technischen Ausführung ein System, mit dem dieser Arbeitspunkt ermittelt und zudem noch den persönlichen Präferenzen des Herstellers des alkoholischen Getränkes angepasst werden kann. Hierzu wird eine kleine Probe des alkoholischen Getränkes in einem separaten UV-durchlässigen Behälter, vorzugsweise aus Quarzglas, in den Strahlengang eingeführt, für einen bestimmten Zeitraum bestrahlt und anschliessend von einer Fachperson verkostet. Dieser Vorgang wird mit unterschiedlichen Bestrahlungszeiten so lange wiederholt, in der Praxis 3 bis 4 Mal, bis der aus Sicht des Herstellers des alkoholischen Getränkes optimale Reifegrad erreicht ist. Danach wird über eine Tabelle oder automatisch über einen einprogrammierten Algorithmus der zeitliche Durchsatz der Pumpe 53 ermittelt und das alkoholische Getränk von dem ersten Tank 51 durch das Gesamtsystem 56 in den zweiten Tank 52 entsprechend Figur 5 gepumpt.

In einer anderen technischen Ausführung, die vorzugsweise zur Behandlung kleinerer Mengen an Destillaten geeignet ist, wir die Strahlenquelle in das alkoholische Getränk eingeführt. Ein ebenfalls in das alkoholische Getränk eingeführtes Rührwerk sorgt dafür, dass alle Teilchen des alkoholischen Getränkes gleichmässig bestrahlt werden.

## Patentansprüche

1. Verfahren zur beschleunigten Reifung und Alterung von alkoholischen Getränken, insbesondere Destillaten und Rotweinen, wobei das zu behandelnde alkoholische Getränk mit einer kürzerwelligen Strahlung ausschliesslich in einem kürzerwelligen Wellenlängenbereich unter 400 nm, der das ultraviolette Spektrum zumindest teilweise umfasst, für eine bestimmte Bestrahlungszeit zur beschleunigten Reifung und Alterung beaufschlagt wird.

2. Verfahren nach Anspruch 1, wobei
• das zu behandelnde alkoholische Getränk in ein UV-durchlässiges Rohr (13, 23, 33, 43) geleitet wird, insbesondere ein Quarzrohr, das durchlässig für ultraviolette Strahlung ist,
• eine Strahlung (14, 24, 34, 44)
- in dem kürzerwelligen Wellenlängenbereich, der das ultraviolette Spektrum zumindest teilweise umfasst, und
- in einem längerwelligen Wellenlängenbereich mit Wellenlängen oberhalb des kürzerwelligen Wellenlängenbereichs
von einer seitlich neben dem UV-durchlässigen Rohr (13, 23, 33, 43) angeordneten Strahlenquelle (11, 21, 31, 41) emittiert wird,
• die Strahlung (14, 24, 34, 44) mittels einer zwischen der Strahlenquelle (11, 21, 31, 41) und dem UV-durchlässigen Rohr (13, 23, 33, 43) angeordneten Abschirmung (12, 28, 38, 48) zumindest in dem längerwelligen Wellenlängenbereich an einem direkten Auftreffen auf das UV-durchlässige Rohr (13, 23, 33, 43) gehindert wird,
• die Strahlung (14, 24, 34, 44) mittels eines optischen Elements, welches einen bestimmten Wellenlängenbereich durchlässt und einen anderen Wellenlängenbereich blockiert oder reflektiert, in
- die kürzerwellige Strahlung (15, 25, 35, 45) in dem kürzerwelligen Wellenlängenbereich und
- eine längerwellige Strahlung (27, 37, 47) in dem längerwelligen Wellenlängenbereich aufgespalten wird,
• das optische Element derart angeordnet und ausgebildet ist, dass
- die kürzerwellige Strahlung (15, 25, 35, 45) auf das UV-durchlässige Rohr (13, 23, 33, 43) trifft und
- die längerwellige Strahlung (27, 37, 47) von dem UV-durchlässigen Rohr (13, 23, 33, 43) wegführt wird,
und
• das zu behandelnde alkoholische Getränk in dem UV-durchlässigen Rohr (13, 23, 33, 43) mit der kürzerwelligen Strahlung (15, 25, 35, 45) für eine bestimmte Bestrahlungszeit zur beschleunigten Reifung und Alterung beaufschlagt wird.

3. Verfahren nach Anspruch 2, wobei
die Strahlenquelle (11, 21, 31, 41) als Quecksilber-Dampflampe, insbesondere als Hg-Mitteldruckentladungslampe, ausgebildet ist.

4. Verfahren nach Anspruch 2 oder 3, wobei
die Abschirmung (12) und das optische Element als eine Einheit ausgebildet sind.

5. Verfahren nach einem der Ansprüche 2 bis 4, wobei das optische Element als ein dichroitisches Filter (12, 22, 32, 42) oder als ein dichroitischer Spiegel ausgebildet ist.

6. Verfahren nach Anspruch 5, wobei
das optische Element als ein dichroitischer Spiegel ausgebildet ist
• die kürzerwellige Strahlung (25, 35, 45) von dem dichroitischen Spiegel (22, 32, 42) derart reflektiert wird, dass die kürzerwellige Strahlung (25, 35, 45) direkt und/oder indirekt auf das UV-durchlässige Rohr (23, 33, 43) trifft, und
• die längerwellige Strahlung (27, 37, 47) von dem dichroitischen Spiegel (22, 32, 42) in eine direkt und indirekt an dem UV-durchlässigen Rohr (23, 33, 43) derart vorbeiführende Richtung durchgelassen wird, dass das UV-durchlässige Rohr (23, 33, 43) frei von der längerwelligen Strahlung (27, 37, 47) ist.

7. Verfahren nach Anspruch 6, wobei
die von der Strahlenquelle (21, 31, 41) emittierte Strahlung (24, 34, 44) von einem ersten konkaven Spiegel (26, 36, 46), insbesondere einer ersten Spiegelrinne oder einem ersten Parabolspiegel, insbesondere einer ersten Parabolrinne, auf den dichroitischen Spiegel (22, 32, 42) reflektiert wird und
• der dichroitische Spiegel (22, 32, 42) die kürzerwellige Strahlung (25, 35, 45) in Richtung des UV-durchlässigen Rohrs (23, 33, 43) derart reflektiert, dass wenigstens ein erster Teil der kürzerwelligen Strahlung (25, 35, 45) direkt auf die zu dem dichroitischen Spiegel (22, 32, 42) hinweisende Seite des UV-durchlässigen Rohrs (23, 33, 43) trifft und optional
• ein zweiter Spiegel (39, 49), insbesondere eine zweite Spiegelrinne oder ein zweiter Parabolspiegel, insbesondere eine zweite Parabolrinne, der das UV-durchlässige Rohr (33, 43) auf der von dem dichroitischen Spiegel (32, 42) wegweisenden Seite umgibt, einen zweiten Teil der kürzerwelligen Strahlung (35, 45) in Richtung des UV-durchlässigen Rohrs (33, 43) derart reflektiert, dass der zweite Teil der kürzerwelligen Strahlung (35, 45) auf die von dem dichroitischen Spiegel (32, 42) wegweisende Seite des UV-durchlässigen Rohrs (33, 43) trifft.

8. Verfahren nach Anspruch 1, wobei
• das zu behandelnde alkoholische Getränk in ein UV-durchlässiges Rohr geleitet wird, insbesondere durch ein Quarzrohr, das durchlässig für ultraviolette Strahlung ist,
• eine Strahlung von einer seitlich neben dem UV-durchlässigen Rohr angeordneten Strahlenquelle emittiert wird, die ausschliesslich in dem kürzerwelligen Wellenlängenbereich liegt und die das ultraviolette Spektrum zumindest teilweise umfasst,
• das zu behandelnde alkoholische Getränk in dem UV-durchlässigen Rohr mit der kürzerwelligen Strahlung für eine bestimmte Bestrahlungszeit zur beschleunigten Reifung und Alterung beaufschlagt wird.

9. Verfahren nach Anspruch 8, wobei
die Strahlungsquelle Strahlung emittiert im Bereich von UV-A und/oder UV-B und/oder UV-C-FUV.

10. Verfahren nach einem der Ansprüche 2 bis 9, wobei das zu behandelnde alkoholische Getränk durch das UV-durchlässige Rohr kontinuierlich, insbesondere mit einer im Wesentlichen konstanten Durchflussgeschwindigkeit, hindurchgeleitet wird, wobei die Bestrahlungszeit des zu behandelnden alkoholischen Getränks über den Durchfluss einer Pumpe gesteuert, insbesondere geregelt wird.

11. Verfahren nach Anspruch 10, wobei in dem UV-durchlässigen Rohr eine derartige turbulente Strömung erzeugt wird, dass das zu behandelnde alkoholische Getränk gleichmässig mit der kürzerwelligen Strahlung beaufschlagt wird.

12. Verfahren nach einem der Ansprüche 2 bis 9, wobei das zu behandelnde alkoholische Getränk
• in das UV-durchlässige Rohr geleitet wird,
• in dem UV-durchlässige Rohr für eine bestimmte Bestrahlungszeit zur Beaufschlagung mit der kürzerwelligen Strahlung verbleibt und
• nach Ablauf der Bestrahlungszeit aus dem UV-durchlässigen Rohr geleitet wird.

13. Vorrichtung zur beschleunigten Reifung und Alterung von alkoholischen Getränken, insbesondere Destillaten und Rotweinen, insbesondere unter Anwendung des Verfahrens nach einem der Ansprüche 2 bis 12, mit
• einem Eingang (E) zum Einleiten des zu behandelnden alkoholischen Getränks,
• einem Ausgang (A) zum Ausleiten des behandelten alkoholischen Getränks,
• mindestens einem UV-durchlässigen Rohr (13, 23, 33, 43),
- das durchlässig für ultraviolette Strahlung ist,
- das zwischen dem Eingang (E) und dem Ausgang (A) angeordnet ist und
- durch welches das alkoholische Getränk leitbar ist,
• insbesondere mindestens einer Pumpe (53), mittels welcher das alkoholische Getränk vom Eingang (E) zum Ausgang (A) durch das mindestens eine UV-durchlässige Rohr (13, 23, 33, 43) mit einer kontinuierlichen oder diskontinuierlichen Durchflussgeschwindigkeit leitbar ist,
• mindestens einer Strahlenquelle die sich seitlich neben dem mindestens einen UV-durchlässigen Rohr erstreckt und mittels derer entweder
a)eine Strahlung ausschliesslich in einem kürzerwelligen Wellenlängenbereich unter 400nm, die das ultraviolette Spektrum zumindest teilweise umfasst, emittierbar ist,
oder
b)mittels welcher eine Strahlung (14, 24, 34, 44) in einem kürzerwelligen Wellenlängenbereich, der das ultraviolette Spektrum zumindest teilweise umfasst, und in einem längerwelligen Wellenlängenbereich mit Wellenlängen oberhalb des kürzerwelligen Wellenlängenbereichs emittierbar ist, wobei die Strahlungsquelle insbesondere eine Quecksilberdampflampe ist, wobei
- mindestens eine Abschirmung (12, 28, 38, 48) vorgesehen ist, die zwischen der Strahlenquelle (11, 21, 31, 41) und dem UV-durchlässiges Rohr (13, 23, 33, 43) derart angeordneten ist, dass die Strahlung (14, 24, 34, 44) zumindest in dem längerwelligen Wellenlängenbereich an einem direkten Auftreffen auf das UV-durchlässiges Rohr (13, 23, 33, 43) gehindert wird, und
- mindestens ein optisches Element vorgesehen ist, das derart ausgebildet ist, dass die Strahlung (14, 24, 34, 44) in
- eine kürzerwellige Strahlung (15, 25, 35, 45) in dem kürzerwelligen Wellenlängenbereich und
- eine längerwellige Strahlung (27, 37, 47) in dem längerwelligen Wellenlängenbereich aufspaltbar ist,
wobei das das optische Element derart angeordnet und ausgebildet ist, dass
- die kürzerwellige Strahlung (15, 25, 35, 45) auf das UV-durchlässige Rohr (13, 23, 33, 43) trifft
- und die längerwellige Strahlung (27, 37, 47) von dem UV-durchlässigen Rohr (13, 23, 33, 43) wegführt wird,
so dass das zu behandelnde alkoholische Getränk in dem UV-durchlässigen Rohr (13, 23, 33, 43) mit einer kürzerwelligen Strahlung ausschliesslich in einem kürzerwelligen Wellenlängenbereich unter 400 nm für eine bestimmte Bestrahlungszeit zur beschleunigten Reifung und Alterung beaufschlagbar ist.

14. Vorrichtung nach Anspruch 13 b), wobei das optische Element als dichroitischer Spiegel (22, 32, 42) ausgebildet ist, mit
• einem ersten Spiegel (36, 46), insbesondere einer ersten Spiegelrinne oder einem ersten Parabolspiegel, insbesondere einer ersten Parabolrinne, der derart angeordnet und ausgebildet ist, dass die von der Strahlenquelle (31, 41) emittierte Strahlung (34, 44) auf den dichroitischen Spiegel (32, 42) reflektiert wird, und
• einem zweiten Spiegel (39, 49), insbesondere einer zweiten Spiegelrinne oder einem zweiten Parabolspiegel, insbesondere einer zweiten Parabolrinne, der das UV-durchlässige Rohr (33, 43) auf der von dem dichroitischen Spiegel (32, 42) wegweisenden Seite umgibt,
wobei
• der dichroitische Spiegel (32, 42) derart angeordnet ist, dass er die kürzerwellige Strahlung (35, 45) in Richtung des UV-durchlässigen Rohrs (33, 43) reflektiert und ein erster Teil der kürzerwelligen Strahlung (35, 45) direkt auf die zu dem dichroitischen Spiegel (32, 42) hinweisende Seite des UV-durchlässigen Rohrs (33, 43) trifft, und
• der zweite Spiegel (39, 49) derart angeordnet und ausgebildet ist, dass ein zweiter Teil der kürzerwelligen Strahlung (35, 45) in Richtung des UV-durchlässigen Rohrs (33, 43) derart reflektiert, dass der zweite Teil der kürzerwelligen Strahlung (35, 45) auf die von dem dichroitischen Spiegel (32, 42) wegweisende Seite des UV-durchlässigen Rohrs (33, 43) trifft.
•

15. Vorrichtung nach Anspruch 14, wobei
der erste Spiegel (36, 46) und/oder der zweite Spiegel (39, 49) jeweils
• als eine in einer Dimension gekrümmte Spiegelrinne, insbesondere als Parabolrinne, ausgebildet sind und
• von einer reflektierenden flexiblen Blechtafel, die zwischen zwei den Krümmungsquerschnitt der Spiegel (36, 46; 39, 49) aufweisenden Rahmenelementen eingespannt sind, gebildet werden.

## Claims

1. Method for accelerated maturation and ageing of alcoholic beverages, in particular distillates and red wines, wherein the alcoholic beverage to be treated is exposed to a shorter-wave radiation exclusively in a shorter wavelength range below 400 nm, which at least partially includes the ultraviolet spectrum, for a specific irradiation time for accelerated maturation and ageing.

2. Method according to claim 1, wherein
• the alcoholic beverage to be treated is conducted into a UV-permeable tube (13, 23, 33, 43), in particular a quartz tube which is permeable to ultraviolet radiation,
• a radiation (14, 24, 34, 44)
- in the shorter wavelength range, which at least partially includes the ultraviolet spectrum, and
- in a longer wavelength range comprising wavelengths above the shorter wavelength range
is emitted by a radiation source (11, 21, 31, 41) arranged laterally next to the UV-permeable tube (13, 23, 33, 43),
• the radiation (14, 24, 34, 44), at least in the longer wavelength range, is prevented from impinging directly on the UV-permeable tube (13, 23, 33, 43) by means of a shield (12, 28, 38, 48) arranged between the radiation source (11, 21, 31, 41) and the UV-permeable tube (13, 23, 33, 43),
• the radiation (14, 24, 34, 44) is split into
- the shorter-wave radiation (15, 25, 35, 45) in the shorter wavelength range and
- a longer-wave radiation (27, 37, 47) in the longer wavelength range
by means of an optical element which allows the passage of a specific wavelength range and blocks or reflects another wavelength range,
• the optical element is arranged and configured such that
- the shorter-wave radiation (15, 25, 35, 45) impinges on the UV-permeable tube (13, 23, 33, 43) and
- the longer-wave radiation (27, 37, 47) is routed away from the UV-permeable tube (13, 23, 33, 43),
and
• the alcoholic beverage to be treated is exposed in the UV-permeable tube (13, 23, 33, 43) to the shorter-wave radiation (15, 25, 35, 45) for a specific irradiation time for accelerated maturation and aging.

3. Method according to claim 2, wherein
the radiation source (11, 21, 31, 41) is configured as a mercury vapour lamp, in particular as a medium-pressure Hg discharge lamp.

4. Method according to claim 2 or 3, wherein
the shield (12) and the optical element are configured as one unit.

5. Method according to one of claims 2 to 4, wherein
the optical element is configured as a dichroic filter (12, 22, 32, 42) or as a dichroic mirror.

6. Method according to claim 5, wherein
the optical element is configured as a dichroic mirror
• the shorter-wave radiation (25, 35, 45) is reflected by the dichroic mirror (22, 32, 42) such that the shorter-wave radiation (25, 35, 45) impinges directly and/or indirectly on the UV-permeable tube (23, 33, 43), and
• the longer-wave radiation (27, 37, 47) is allowed to pass through the dichroic mirror (22, 32, 42) in a direction that leads directly and indirectly past the UV-permeable tube (23, 33, 43) such that the UV-permeable tube (23, 33, 43) is free from the longer-wave radiation (27, 37, 47).

7. Method according to claim 6, wherein
the radiation (24, 34, 44) emitted by the radiation source (21, 31, 41) is reflected by a first concave mirror (26, 36, 46), in particular a first mirror trough or a first parabolic mirror, in particular a first parabolic trough, onto the dichroic mirror (22, 32, 42), and
• the dichroic mirror (22, 32, 42) reflects the shorter-wave radiation (25, 35, 45) in the direction of the UV-permeable tube (23, 33, 43) such that at least a first portion of the shorter-wave radiation (25, 35, 45) impinges directly on the side of the UV-permeable tube (23, 33, 43) facing towards the dichroic mirror (22, 32, 42), and optionally
• a second mirror (39, 49), in particular a second mirror trough or a second parabolic mirror, in particular a second parabolic trough which surrounds the UV-permeable tube (33, 43) on the side facing away from the dichroic mirror (32, 42), reflects a second portion of the shorter-wave radiation (35, 45) in the direction of the UV-permeable tube (33, 43) such that the second portion of the shorter-wave radiation (35, 45) impinges on the side of the UV-permeable tube (33, 43) facing away from the dichroic mirror (32, 42).

8. Method according to claim 1, wherein
• the alcoholic beverage to be treated is conducted into a UV-permeable tube, in particular through a quartz tube which is permeable to ultraviolet radiation,
• a radiation which is exclusively in the shorter wavelength range and which at least partially includes the ultraviolet spectrum is emitted by a radiation source arranged laterally next to the UV-permeable tube,
• the alcoholic beverage to be treated is exposed in the UV-permeable tube to the shorter-wave radiation for a specific irradiation time for accelerated maturation and ageing.

9. Method according to claim 8, wherein
the radiation source emits radiation in the UV-A and/or UV-B and/or UV-C-FUV range.

10. Method according to one of claims 2 to 9, wherein
the alcoholic beverage to be treated is conducted through the UV-permeable tube continuously, in particular at a substantially constant flow rate, wherein the irradiation time of the alcoholic beverage to be treated is controlled, in particular regulated, via the flow rate of a pump.

11. Method according to claim 10, wherein
such a turbulent flow is generated in the UV-permeable tube that the alcoholic beverage to be treated is uniformly exposed to the shorter-wave radiation.

12. Method according to one of claims 2 to 9, wherein the alcoholic beverage to be treated
• is conducted into the UV-permeable tube,
• remains in the UV-permeable tube for a specific irradiation time for exposure to the shorter-wave radiation, and
• is conducted out of the UV-permeable tube after the irradiation time has elapsed.

13. Device for accelerated maturation and aging of alcoholic beverages, in particular distillates and red wines, in particular using the method according to one of claims 2 to 12, said device having
• an inlet (E) for introducing the alcoholic beverage to be treated,
• an outlet (A) for discharging the treated alcoholic beverage,
• at least one UV-permeable tube (13, 23, 33, 43)
- which is permeable to ultraviolet radiation,
- which is arranged between the inlet (E) and the outlet (A), and
- through which the alcoholic beverage can be conducted,
• in particular at least one pump (53), by means of which the alcoholic beverage can be conducted from the inlet (E) to the outlet (A) through the at least one UV-permeable tube (13, 23, 33, 43) with a continuous or discontinuous flow rate,
• at least one radiation source which extends laterally next to the at least one UV-permeable tube and by means of which either
a) a radiation exclusively in a shorter wavelength range below 400 nm, which at least partially includes the ultraviolet spectrum, can be emitted,
or
b) by means of which a radiation (14, 24, 34, 44) in a shorter wavelength range, which at least partially includes the ultraviolet spectrum, and in a longer wavelength range comprising wavelengths above the shorter wavelength range can be emitted, wherein the radiation source is in particular a mercury vapour lamp, wherein
- at least one shield (12, 28, 38, 48) is provided, which is arranged between the radiation source (11, 21, 31, 41) and the UV-permeable tube (13, 23, 33, 43) such that the radiation (14, 24, 34, 44) at least in the longer wavelength range is prevented from impinging directly on the UV-permeable tube (13, 23, 33, 43), and
- at least one optical element is provided, which is configured such that the radiation (14, 24, 34, 44) can be split into
- a shorter-wave radiation (15, 25, 35, 45) in the shorter wavelength range and
- a longer-wave radiation (27, 37, 47) in the longer wavelength range,
wherein the the optical element is arranged and configured such that
- the shorter-wave radiation (15, 25, 35, 45) impinges on the UV-permeable tube (13, 23, 33, 43)
- and the longer-wave radiation (27, 37, 47) is routed away from the UV-permeable tube (13, 23, 33, 43),
so that the alcoholic beverage to be treated can be exposed in the UV-permeable tube (13, 23, 33, 43) to a shorter-wave radiation exclusively in a shorter wavelength range below 400 nm for a specific irradiation time for accelerated maturation and ageing.

14. Device according to claim 13 b), wherein
the optical element is configured as a dichroic mirror (22, 32, 42), comprising
• a first mirror (36, 46), in particular a first mirror trough or a first parabolic mirror, in particular a first parabolic trough, which is arranged and configured such that the radiation (34, 44) emitted by the radiation source (31, 41) is reflected onto the dichroic mirror (32, 42), and
• a second mirror (39, 49), in particular a second mirror trough or a second parabolic mirror, in particular a second parabolic trough, which surrounds the UV-permeable tube (33, 43) on the side facing away from the dichroic mirror (32, 42),
wherein
• the dichroic mirror (32, 42) is arranged such that it reflects the shorter-wave radiation (35, 45) in the direction of the UV-permeable tube (33, 43) and a first portion of the shorter-wave radiation (35, 45) impinges directly on the side of the UV-permeable tube (33, 43) facing towards the dichroic mirror (32, 42), and
• the second mirror (39, 49) is arranged and configured such that a second portion of the shorter-wave radiation (35, 45) reflects in the direction of the UV-permeable tube (33, 43) such that the second portion of the shorter-wave radiation (35, 45) impinges on the side of the UV-permeable tube (33, 43) facing away from the dichroic mirror (32, 42) .

15. Device according to claim 14, wherein
the first mirror (36, 46) and/or the second mirror (39, 49)
• are each configured as a mirror trough that is curved in one dimension, in particular as a parabolic trough, and
• are each formed by a reflective flexible sheet-metal panel, which are clamped between two frame elements having the curvature cross-section of the mirrors (36, 46; 39, 49).

## Revendications

1. Procédé pour la maturation et le vieillissement accélérés de boissons alcoolisées, en particulier de distillats et de vins rouges, dans lequel la boisson alcoolisée à traiter est exposée à un rayonnement de longueur d'onde plus courte, exclusivement dans la bande de longueurs d'onde plus courtes d'une longueur d'onde inférieure à 400 nm incluant au moins en partie le spectre ultraviolet, pendant une durée d'irradiation déterminée, en vue d'accélérer la maturation et le vieillissement.

2. Procédé selon la revendication 1, dans lequel
• la boisson alcoolisée à traiter est acheminée dans un tube laissant passer les UV (13, 23, 33, 43), en particulier un tube de quartz laissant passer le rayonnement ultraviolet,
• un rayonnement (14, 24, 34, 44)
- dans la bande de longueurs d'onde plus courtes, incluant au moins partiellement le spectre ultraviolet, et
- dans une bande de longueurs d'onde plus longues, de longueur d'onde plus longue que la bande de longueurs d'onde plus courtes
est émis par une source de rayonnement (11, 21, 31, 41) disposée sur le côté du tube laissant passer les UV (13, 23, 33, 43),
• le rayonnement (14, 24, 34, 44) est arrêté au moyen d'un écran (12, 28, 38, 48) disposé entre la source de rayonnement (11, 21, 31, 41) et le tube laissant passer les UV (13, 23, 33, 43), au moins dans la bande de longueurs d'onde plus longues, pour l'empêcher d'atteindre directement le tube laissant passer les UV (13, 23, 33, 43),
• le rayonnement (14, 24, 34, 44) est divisé, au moyen d'un élément optique qui laisse passer une certaine bande de longueurs d'onde et arrête ou réfléchit une autre bande de longueurs d'onde, en
- un rayonnement en ondes plus courtes (15, 25, 35, 45) dans la bande de longueurs d'onde plus courtes et
- un rayonnement en ondes plus longues (27, 37, 47) dans la bande de longueurs d'onde plus longues,
• l'élément optique est disposé et conformé de telle façon que
- le rayonnement en ondes plus courtes (15, 25, 35, 45) atteigne le tube laissant passer les UV (13, 23, 33, 43) et
- le rayonnement en ondes plus longues (27, 37, 47) soit éloigné du tube laissant passer les UV (13, 23, 33, 43), et
• la boisson alcoolisée à traiter est exposée au rayonnement en ondes plus courtes (15, 25, 35, 45) pendant une certaine durée d'irradiation dans le tube laissant passer les UV (13, 23, 33, 43) en vue d'accélérer sa maturation et son vieillissement.

3. Procédé selon la revendication 2, dans lequel la source de rayonnement (11, 21, 31, 41) est conçue comme une lampe à vapeurs de mercure, en particulier comme une lampe à décharge à vapeurs de mercure sous moyenne pression.

4. Procédé selon la revendication 2 ou 3, dans lequel l'écran (12) et l'élément optique sont conçus comme une même unité.

5. Procédé selon l'une des revendications 2 à 4, dans lequel l'élément optique est conçu comme un filtre dichroïque (12, 22, 32, 42) ou comme un miroir dichroïque.

6. Procédé selon la revendication 5, dans lequel l'élément optique est conçu comme un miroir dichroïque,
• le rayonnement en ondes plus courtes (25, 35, 45) est réfléchi par le miroir dichroïque (22, 32, 42) de telle manière que le rayonnement en ondes plus courtes (25, 35, 45) atteigne directement et/ou indirectement le tube laissant passer les UV (23, 33, 43) et
• le rayonnement en ondes plus longues (27, 37, 47) est transmis par le miroir dichroïque (22, 32, 42) dans une direction qui passe directement ou indirectement devant le tube laissant passer les UV (23, 33, 43), de telle manière que le tube laissant passer les UV (23, 33, 43) ne reçoive pas le rayonnement en ondes plus longues (27, 37, 47).

7. Procédé selon la revendication 6, dans lequel le rayonnement (24, 34, 44) émis par la source de rayonnement (21, 31, 41) est réfléchi vers le miroir dichroïque (22, 32, 42) par un premier miroir concave (26, 36, 46), en particulier un premier miroir cylindrique ou un premier miroir parabolique, en particulier un premier miroir cylindro-parabolique, et
• le miroir dichroïque (22, 32, 42) réfléchit le rayonnement en ondes plus courtes (25, 35, 45) en direction du tube laissant passer les UV (23, 33, 43) de telle manière qu'au moins une première partie du rayonnement en ondes plus courtes (25, 35, 45) atteigne directement le côté du tube laissant passer les UV (23, 33, 43) tourné vers le miroir dichroïque (22, 32, 42) et, facultativement,
• un deuxième miroir (39, 49), en particulier un deuxième miroir cylindrique ou un deuxième miroir parabolique, en particulier un deuxième miroir cylindro-parabolique, qui entoure le tube laissant passer les UV (33, 43) sur le côté tourné à l'opposé du miroir dichroïque (32, 42), réfléchit une deuxième partie du rayonnement en ondes plus courtes (35, 45) en direction du tube laissant passer les UV (33, 43), de telle manière que la deuxième partie du rayonnement en ondes plus courtes (35, 45) atteigne le côté du tube laissant passer les UV (33, 43) tourné à l'opposé du miroir dichroïque (32, 42).

8. Procédé selon la revendication 1, dans lequel
• la boisson alcoolisée à traiter est acheminée dans un tube laissant passer les UV, en particulier un tube en quartz, qui laisse passer le rayonnement ultraviolet,
• un rayonnement qui se situe exclusivement dans la bande de longueurs d'onde plus courtes et inclut au moins partiellement le spectre ultraviolet est émis par une source de rayonnement disposée sur le côté du tube laissant passer les UV,
• la boisson alcoolisée à traiter est exposée au rayonnement en ondes plus courtes pendant une certaine durée d'irradiation dans le tube laissant passer les UV en vue d'accélérer sa maturation et son vieillissement.

9. Procédé selon la revendication 8, dans lequel la source de rayonnement émet un rayonnement dans la bande des UVA et/ou des UVB et/ou des UVC-FUV.

10. Procédé selon l'une des revendications 2 à 9, dans lequel la boisson alcoolisée à traiter est acheminée à travers le tube laissant passer les UV de façon continue, en particulier à une vitesse d'écoulement sensiblement constante, la durée d'irradiation de la boisson alcoolisée à traiter étant contrôlée, en particulier régulée, par le débit d'une pompe.

11. Procédé selon la revendication 10, dans lequel est créé dans le tube laissant passer les UV un écoulement turbulent tel que la boisson alcoolisée à traiter est uniformément exposée au rayonnement en ondes plus courtes.

12. Procédé selon l'une des revendications 2 à 9, dans lequel la boisson alcoolisée à traiter
• est acheminée dans le tube laissant passer les UV,
• reste dans le tube laissant passer les UV pendant une certaine durée d'irradiation pour être exposée au rayonnement en ondes plus courtes et
• est acheminée hors du tube laissant passer les UV à la fin de la durée d'irradiation.

13. Dispositif pour la maturation et le vieillissement accélérés de boissons alcoolisées, en particulier de distillats et de vins rouges, en particulier mettant en oeuvre le procédé selon l'une des revendications 2 à 12, avec :
• une entrée (E) pour amener la boisson alcoolisée à traiter,
• une sortie (A) pour évacuer la boisson alcoolisée traitée,
• au moins un tube laissant passer les UV (13, 23, 33, 43)
- qui laisse passer le rayonnement ultraviolet,
- qui est disposé entre l'entrée (E) et la sortie (A) et
- à travers lequel la boisson alcoolisée peut être acheminée,
• en particulier au moins une pompe (53), au moyen de laquelle la boisson alcoolisée peut être acheminée de l'entrée (E) à la sortie (A) à travers l'au moins un tube laissant passer les UV (13, 23, 33, 43) à une vitesse d'écoulement continue ou discontinue,
• au moins une source de rayonnement qui s'étend sur le côté de l'au moins un tube laissant passer les UV et au moyen de laquelle
a) soit un rayonnement exclusivement dans une bande de longueurs d'onde plus courtes, inférieure à 400 nm, incluant au moins en partie le spectre ultraviolet, peut être émis,
b) soit un rayonnement (14, 24, 34, 44) dans une bande de longueurs d'onde plus courtes, incluant au moins partiellement le spectre ultraviolet, et dans une bande de longueurs d'onde plus longues à des longueurs d'onde plus longues que la bande de longueurs d'onde plus courtes peut être émis, la source de rayonnement étant en particulier une lampe à vapeurs de mercure,
- au moins un écran (12, 28, 38, 48) étant prévu et disposé entre la source de rayonnement (11, 21, 31, 41) et le tube laissant passer les UV (13, 23, 33, 43) de manière à empêcher le rayonnement (14, 24, 34, 44) d'atteindre directement le tube laissant passer les UV (13, 23, 33, 43) au moins dans la bande de longueurs d'onde plus longues et
- au moins un élément optique étant prévu et conçu de telle façon que le rayonnement (14, 24, 34, 44) puisse être divisé en
- un rayonnement en ondes plus courtes (15, 25, 35, 45) dans la bande de longueurs d'onde plus courtes et
- un rayonnement en ondes plus longues (27, 37, 47) dans la bande de longueurs d'onde plus longues,
l'élément optique étant disposé et conçu de telle manière que
- le rayonnement en ondes plus courtes (15, 25, 35, 45) atteigne le tube laissant passer les UV (13, 23, 33, 43)
- et le rayonnement en ondes plus longues (27, 37, 47) soit écarté du tube laissant passer les UV (13, 23, 33, 43),
de telle sorte que la boisson alcoolisée à traiter puisse être exposée à un rayonnement en ondes plus courtes uniquement dans une bande de longueurs d'onde plus courtes inférieure à 400 nm dans le tube laissant passer les UV (13, 23, 33, 43), pendant une certaine durée d'irradiation, afin d'accélérer sa maturation et son vieillissement.

14. Dispositif selon la revendication 13 b), dans lequel l'élément optique est conçu comme un miroir dichroïque (22, 32, 42), avec
• un premier miroir (36, 46), en particulier un premier miroir cylindrique ou un premier miroir parabolique, en particulier un premier miroir cylindro-parabolique, disposé et conçu de telle façon que le rayonnement (34, 44) émis par la source de rayonnement (31, 41) soit réfléchi sur le miroir dichroïque (32, 42) et
• un deuxième miroir (39, 49), en particulier un deuxième miroir cylindrique ou un deuxième miroir parabolique, en particulier un deuxième miroir cylindro-parabolique, qui entoure le tube laissant passer les UV (33, 43) sur le côté tourné à l'opposé du miroir dichroïque (32, 42),
• le miroir dichroïque (32, 42) étant disposé de telle façon que le rayonnement en ondes plus courtes (35, 45) soit réfléchi en direction du tube laissant passer les UV (33, 43) et qu'une première partie du rayonnement en ondes plus courtes (35, 45) atteigne le côté du tube laissant passer les UV (33, 43) directement tourné vers le miroir dichroïque (32, 42), et
• le deuxième miroir (39, 49) étant disposé et conçu de telle façon qu'une deuxième partie du rayonnement en ondes plus courtes (35, 45) soit réfléchie en direction du tube laissant passer les UV (33, 43) de telle sorte que la deuxième partie du rayonnement en ondes plus courtes (35, 45) atteigne le côté du tube laissant passer les UV (33, 43) tourné à l'opposé du miroir dichroïque (32, 42).

15. Dispositif selon la revendication 14, dans lequel le premier miroir (36, 46) et/ou le deuxième miroir (39, 49)
• sont conçus comme un miroir cylindrique incurvé dans une dimension, en particulier comme un miroir cylindro-parabolique et
• sont formés par une plaque de tôle réfléchissante flexible qui est serrée entre deux éléments de cadre présentant la section de courbure des miroirs (36, 46 ; 39, 49).
